# EUROPEAN PATENT SPECIFICATION

(11) **EP 3 107 947 B1**
(45) Date of publication and mention of the grant of the patent: **02.01.2019**
(21) Application number: 15703612.0
(22) Date of filing: 11.02.2015
(51) Int. Cl.: C08G 18/79, C08G 18/02, C08G 18/12, C08G 18/20, C08G 18/32, C08G 18/34, C08G 18/42

(54) **HYDROLYSIS RESISTANT POLYURETHANE MOULDINGS COMPOSED OF POLYESTER POLYURETHANE**
GEGEN HYDROLYSE BESTÄNDIGE POLYURETHANFORMKÖRPER AUS POLYESTERPOLYURETHAN
PIÈCES MOULÉES EN POLYURÉTHANNE RÉSISTANTES À L'HYDROLYSE COMPOSÉES DE POLYURÉTHANNE POLYESTER

(30) Priority: 19.02.2014 WO PCT/CN2014/072268
(43) Date of publication of application: 28.12.2016
(73) Proprietor: BASF SE, 67056 Ludwigshafen am Rhein (DE)
(72) Inventor: LIANG, Zhen Peng, 511495 (CN)
(74) Representative: BASF IP Association
(86) International application number: PCT/EP2015/052838
(87) International publication number: WO 2015/124476

(56) References cited:
- US-A1- 2013 249 134

## Description

The present invention relates to a process for producing polyurethane moldings, wherein (a) organic polyisocyanates are mixed with (b) polyol comprising polyesterols, (c) optionally blowing agents, (d) chain extenders and/or crosslinkers, (e) amine catalyst, (f) carbodiimide of the general formula Z-N=C=N-Z, where Z is an organic radical and the nitrogen atom of the carbodiimide group -N=C=N- is bound either to a tertiary carbon atom or to a carbon atom of an aromatic system which on the ring positions adjacent to the C-N bond in the aromatic system bears an organic radical bound via a secondary or tertiary carbon atom to the aromatic system, (g) at least one member selected from the group consisting of (i) an ester of a monobasic carboxylic acid, and (ii) an ester of a polybasic carboxylic acid, the (first) dissociation constant (pK) of each acid being 0.5 to 5, and optionally (h) other auxiliaries and/or additives, to form a reaction mixture, the mixture is introduced into a mold and allowed to react to form a polyurethane molding, wherein the polyesterols comprise a polyesterol (b1) obtainable by esterification of an aliphatic dicarboxylic acid having 2 to 10, carbon atoms and at least one higher functional alcohol having 5 to 20 carbon atoms and optionally one higher functional alcohol having 2 to 4 carbon atoms wherein at least 20 wt.-% of higher functional alcohol is a higher functional alcohol having 5 or more carbon atoms, based on the total amount of the higher functional alcohol in component (b1), and optionally a polyesterol (b2) obtainable by esterification of an aliphatic or aromatic dicarboxylic acid having 2 to 10 carbon atoms and at least one higher functional alcohol having 2 to 4 carbon atoms and less than 20 wt.-% of at least one higher functional alcohol having 5 or more carbon atoms, based on the total amount of the higher functional alcohol in component (b2), and optionally a further polyesterol (b3) wherein the acid component comprises at least one dimer acid. The present invention further relates to polyurethane mouldings obtainable by such a process and the use of these polyurethane mouldings as shoe soles, in particular for army boots which are often stored for years before use.

Polyester polyurethanes are used, for example, as compact or foamed elastomers in, for example, shoe applications. Here, the polyester polyurethanes have better mechanical properties than polyether polyurethanes. Furthermore, the PESOL polyurethanes display improved swelling resistance in the presence of organic materials such as isooctane. This swelling resistance is an important requirement for use as safety shoe and cannot be fulfilled by polyether polyurethane. A disadvantage of polyester polyurethanes is that they are susceptible to hydrolysis especially in a humid hot environment. This hydrolysis does not only take place during use but also during storage. This is especially detrimental in areas where fashion does not play a major role and boots are usually stored for several years like army boots.

Polyurethanes based on polyesterols are usually produced using polyesterols obtained by polycondensation of C4-C6-dicarboxylic acids with polyfunctional alcohols. However, these polyurethanes have the disadvantage that they have only unsatisfactory hydrolysis stability. To improve the hydrolysis stability of polyurethanes based on polyesterols, these C4-C6-dicarboxylic acids are, for example, replaced by more hydrophobic dicarboxylic acids. Thus, US 2005124711 describes microcellular polyester polyurethanes which are obtained from polyesterols obtained from dimeric fatty acids. Nevertheless the approach as disclosed in US 2005124711 does not lead to a major improvement of hydrolysis stability.

WO 2004/050735 describes the use of polyesterols based on a combination of orthophthalic acid and a dicarboxylic acid having 8-12 carbon atoms in order to improve the hydrolysis stability.

A disadvantage of these polyesters having improved hydrolysis stability is that the raw materials used are expensive. Furthermore, the mechanical properties are poorer compared to polyurethanes based on classical polyesterols which are obtained by polycondensation of C4-C6-dicarboxyliac acids with polyfunctional alcohols.

US 20020120027 discloses a process in which esters of monobasic or polybasic carboxylic acids are utilized in substoichiometric ratios to the amine catalyst used in order to improve the hydrolysis stability. A disadvantage of the process disclosed here is that the improvement in the hydrolysis stability lasts for only a short time (about 9 days at 70°C and 95% r.H.).

It was an object of the present invention to provide polyurethanes which are based on polyesterols and have improved hydrolysis stability and excellent mechanical properties. It was further object of the present invention to provide polyurethane mouldings that pass the hydrolysis testing using SATRA TM344 (storing at 70 °C and 95 % relative humidity) for at least 28 days with tensile strength retention of more than 80 % of the initial value. Further it was objet to provide polyurethane mouldings that are suitable as sole material for army boots.

The object of the invention has been able to be achieved by a polyurethane molding which can be produced by a process, in which (a) organic polyisocyanates are mixed with (b) polyol comprising polyesterpolyols (b1), (b2) and (b3), (c) optionally blowing agents, (d) chain extenders and/or crosslinkers, (e) amine catalyst, (f) carbodiimide of the general formula Z-N=C=N-Z, where Z is an organic radical and the nitrogen atom of the carbodiimide group -N=C=N- is bound either to a tertiary carbon atom or to a carbon atom of an aromatic system which on the ring positions adjacent to the C-N bond in the aromatic system bears an organic radical bound via a secondary or tertiary carbon atom to the aromatic system, (g) at least one member selected from the group consisting of (i) an ester of a monobasic carboxylic acid, and (ii) an ester of a polybasic carboxylic acid, the (first) dissociation constant (pK) of each acid being 0.5 to 5, and optionally (h) other auxiliaries and/or additives, to form a reaction mixture, the mixture is introduced into a mold and allowed to react to form a polyurethane molding, wherein the polyesterols comprise a polyesterol (b1) obtainable by esterification of an aliphatic dicarboxylic acid having 2 to 10, carbon atoms and at least one higher functional alcohol having 5 to 20 carbon atoms and optionally one higher functional alcohol having 2 to 4 carbon atoms wherein at least 20 wt.-% of higher functional alcohol is a higher functional alcohol having 5 or more carbon atoms, based on the total amount of the higher functional alcohol in component (b1), and a polyesterol (b2) obtainable by esterification of an aliphatic or aromatic dicarboxylic acid having 2 to 10 carbon atoms and at least one higher functional alcohol having 2 to 4 carbon atoms and less than 20 wt.-% of at least one higher functional alcohol having 5 or more carbon atoms, based on the total amount of the higher functional alcohol in component (b2), and a further polyesterol (b3) wherein the acid component comprises at least one dimer acid.

In particular, the polyurethane moldings of the invention are elastomers. These comprise compact polyurethane elastomers, also referred to as cast resins, and elastomeric polyurethane foams, preferably integral polyurethane foams. For the purposes of the present invention, the term elastomeric polyurethane foam refers to polyurethane foams in accordance with DIN 7726 which after brief deformation by 50% of the thickness in accordance with DIN 53 577 have no remaining deformation of more than 2% of their initial thickness after 10 minutes. For the purposes of the invention, integral polyurethane foams are polyurethane foams in accordance with DIN 7726 having an outer zone which, due to the shaping process, has a higher density than the core. The overall foam density averaged over the core and the outer zone is preferably from > 150 g/l to 850 g/l, preferably from 180 g/l to 750 g/l, more preferably from 200 g/l to 650 g/l. The density of compact polyurethane elastomers is from > 850 g/l to 1400 g/l, preferably from 900 to 1300 g/l and in particular from 950 to 1200 g/l.

The organic and/or modified polyisocyanates (a) used for producing the polyurethane moldings of the invention comprise the aliphatic, cycloaliphatic and aromatic bifunctional or polyfunctional isocyanates known from the prior art (constituent a-1) and also any mixtures thereof. Examples are monomeric diphenylmethane diisocyanate (MDI), e.g. diphenylmethane 4,4'-diisocyanate, diphenylmethane 2,4'-diisocyanate, the mixtures of monomeric diphenylmethane diisocyanates and homologues of diphenylmethane diisocyanate having more than two rings (polymeric MDI), tetramethylene diisocyanate, hexamethylene diisocyanate (HDI), isophorone diisocyanate (IPDI), tolylene 2,4- or 2,6-diisocyanate (TDI) or mixtures of the isocyanates mentioned.

Preference is given to using 4,4'-MDI. The 4,4'-MDI which is preferably used can comprise from 0 to 20% by weight of 2,4'-MDI and small amounts, up to about 10% by weight, of allophanate- or uretonimine-modified polyisocyanates. Small amounts of polyphenylenepolymethylene polyisocyanate (polymeric MDI) can also be used. The total amount of these high-functionality polyisocyanates should preferably not exceed 5% by weight of the isocyanate used.

The polyisocyanate component (a) is preferably used in the form of polyisocyanate prepolymers. These polyisocyanate prepolymers can be obtained by reacting polyisocyanates (a-1) of the type described above, for example at temperatures of from 30 to 100°C, preferably at about 80°C, with polyols (a-2), to form the prepolymer.

Polyols (a-2) are known to those skilled in the art and are described, for example, in "Kunststoffhandbuch", volume 7, Polyurethane, Carl Hanser Verlag, 3rd edition 1993, chapter 3.1. Preference is given to using the polyesterols described under b) as polyols (a-2).

Conventional chain extenders or crosslinkers are optionally added to the abovementioned polyesterols in the preparation of the isocyanate prepolymers. Such substances are described below under (d).

The polyols (b) comprise polyesterpolyols (b1), (b2) and (b3). As polyesterols, use is made of polyesterols having at least two hydrogen atoms which are reactive toward isocyanate groups. Polyesterols preferably have a number average molecular weight of greater than 450 g/mol, particularly preferably from > 500 to < 6000 g/mol and in particular from 600 to 3500 g/mol. Preferably the component (b) contains only polyesterpolyols.

Polyester polyols for the production of polyesterbased polyurethanes in general can be prepared from organic dicarboxylic acids for example organic acids having from 2 to 12 carbon atoms, preferably aliphatic dicarboxylic acids having from 2 to 10 carbon atoms and particularly preferably from 4 to 6 carbon atoms, and polyhydric alcohols, preferably diols, having from 2 to 12 carbon atoms, preferably from 2 to 6 carbon atoms.

To prepare the polyester polyols, the organic, for example aromatic and preferably aliphatic, polycarboxylic acids and/or derivatives and polyhydric alcohols can be polycondensed in the absence of catalyst or preferably in the presence of esterification catalysts, advantageously in an atmosphere of inert gas, e.g. nitrogen, carbon monoxide, helium, argon etc., in the melt at temperatures of from 150 to 250°C, preferably from 180 to 220°C, optionally under reduced pressure, to the desired acid number, which is preferably less than 10, particularly preferably less than 2 and even more preferred less than 1. In a preferred embodiment, the esterification mixture is polycondensed at the abovementioned temperatures to an acid number of from 80 to 30, preferably from 40 to 30, under atmospheric pressure and subsequently under a pressure of less than 500 mbar, preferably from 50 to 150 mbar. Possible esterification catalysts are, for example, iron, cadmium, cobalt, lead, zinc, antimony, magnesium, titanium and tin catalysts in the form of metals, metal oxides or metal salts. However, the polycondensation can also be carried out in the liquid phase in the presence of diluents and/or entrainers such as benzene, toluene, xylene or chlorobenzene to azeotropically distill off the water of condensation. To prepare the polyester polyols, the organic polycarboxylic acids and/or derivatives and polyhydric alcohols are advantageously polycondensed in a molar ratio of 1 : 1-1.8, preferably 1 : 1.05-1.2.

The polyester polyols obtained preferably have a functionality of from 2 to 4, in particular from 2 to 3, and a number average molecular weight of from 480 to 8000 gmol, preferably from 700 to 5000 g/mol and in particular 1000 to 3000 g/mol.

Further suitable polyesterols are polymer-modified polyesterols, preferably graft polyesterols. Such a polyesterol is a polymer polyesterol which usually has a content of preferably thermoplastic polymers of from 5 to 60% by weight, preferably from 10 to 55% by weight, particularly preferably from 15 to 50% by weight and in particular from 20 to 40% by weight. These polymer polyesterols are described in WO 05/098763 and EP-A-250 351, for example, and are usually prepared by free-radical polymerization of suitable olefinic monomers, for example styrene, acrylonitrile, (meth)acrylates, (meth)acrylic acid and/or acrylamide, in a polyesterol serving as graft base. The side chains are generally formed by transfer of the free radicals from growing polymer chains to polyesterols or polyetherols. The polymer polyesterol comprises, apart from the graft copolymer, predominantly the homopolymers of the olefins dispersed in unchanged polyesterol.

In a preferred embodiment, acrylonitrile, styrene, preferably acrylonitrile and styrene, are used as monomers. The monomers are optionally polymerized in the presence of further monomers, a macromer, i.e. an unsaturated, free-radically polymerizable polyol, a moderator and with use of a free-radical initiator, usually azo or peroxide compounds, in a polyesterol or polyetherol as continuous phase. This process is described, for example, in DE 111 394, US 3 304 273, US 3 383 351, US 3 523 093, DE 1 152 536 and DE 1 152 537.

During the free-radical polymerization, the macromers are concomitantly incorporated into the copolymer chain. This forms block copolymers having a polyester block and a poly(acrylonitrile-styrene) block which at the interface of continuous phase and dispersed phase act as phase compatibilizers and suppress agglomeration of the polymer polyesterol particles. The proportion of macromers is usually from 1 to 20% by weight, based on the total weight of the monomers used for preparing the polymer polyol.

If polymer polyol is comprised, it is preferably present together with further polyesterols. The proportion of polymer polyol is particularly preferably greater than 5% by weight, based on the total weight of the component (b). The polymer polyesterols can, for example, be comprised in an amount of from 7 to 90% by weight or from 11 to 80% by weight, based on the total weight of the component (b).

The polyols (b) comprise at least one a polyesterol (b1) obtainable by esterification of an aliphatic dicarboxylic acid having 2 to 10, carbon atoms and at least one higher functional alcohol having 5 to 20 carbon atoms and optionally one higher functional alcohol having 2 to 4 carbon atoms wherein at least 20 wt.-%, preferably at least 30 wt.-% and more preferably at least 40 wt.-% and especially more than 50 wt.-% of higher functional alcohol is a higher functional alcohol having 5 or more carbon atoms. In addition to polyesterol (b1) the polyols (b) comprise a polyesterol (b2) obtainable by esterification of an aliphatic or aromatic dicarboxylic acid having 2 to 10 carbon atoms and at least one higher functional alcohol having 2 to 4 carbon atoms and less than 20 wt.-%, preferably less than 10 wt.-% and more preferably less than 5 wt.-% of at least one higher functional alcohol having 5 or more carbon atoms, based on the total amount of the higher functional alcohol in component (b2). Preferably the number of carbon atoms is only calculated for the structure having the largest amount of interconnected carbon atoms, i.e. the number of carbon atoms in a linear or branched alkyl chain. This means that in this preferred embodiment the relevant number of carbon atoms in a structure is determined by only considering the carbon atoms which are linked to each other in a linear or branched alkyl chain. In case that such a structure is interrupted by a hetero atom like in an ether structure, for example as in diethylene glycol, only the largest carbon structure where the carbon atoms are linked to each other which in this case is the ethylene structure is considered having two carbon atoms.

Possible dicarboxylic acids are, for example: succinic acid, glutaric acid, adipic acid, suberic acid, azelaic acid, sebacic acid, decanedicarboxylic acid, maleic acid, fumaric acid, phthalic acid, isophthalic acid and terephthalic acid. The dicarboxylic acids can be used either individually or in admixture with one another. Instead of the free dicarboxylic acids, it is also possible to use the corresponding dicarboxylic acid derivatives such as dicarboxylic esters of alcohols having from 1 to 4 carbon atoms or dicarboxylic anhydrides. Preference is given to using dicarboxylic acid mixtures of succinic, glutaric and adipic acid in weight ratios of, for example, 20-35 : 35-50 : 20-32 and in particular adipic acid. Polyester polyols derived from lactones, e.g. ε-caprolactone, or hydroxycarboxylic acids, e.g. ω-hydroxycaproic acid, can also be used. For the above calculation these polyesterpolyols are considered as acids.

Examples of dihydric and polyhydric alcohols, in particular diols, are: ethanediol, diethylene glycol, 1,2- or 1,3-propanediol, dipropylene glycol, 1,4-butanediol, 1,5-pentanediol, 1,6-hexanediol, 1,10-decanediol, glycerol and trimethylolpropane. Preference is given to using ethanediol, diethylene glycol, 1,4-butanediol, 1,5-pentanediol, 1,6-hexanediol and neopentylglycol wherein 1,5-pentanediol, 1,6-hexanediol and neopentylglycol are considered as diols having 5 or more carbon atoms.

The polyols (b) further comprise a polyester polyol (b3) based on dimer acids. In polyester polyols (b3) the acid component comprises a dimer acid. The polyesterol (b3) is obtainable by reacting a dimer acid, optionally an aromatic or aliphatic dicarboxylic acid having 2 to 15 carbon atoms and at least one higher functional alcohol having 2 to 20 carbon atoms. As dicarboxylic acid and dihydric or polyhydric alcohol preferably the above defined compounds can be used.

The term dimer fatty acid is well known in the art and refers to the dimerisation product of mono- or polyunsaturated fatty acids and/or esters thereof. Preferred dimer fatty acids are dimers of C10 to C30, more preferably C12 to C24, particularly C14 to C22, and especially C18 alkyl chains. Suitable dimer fatty acids include the dimerisation products of oleic acid, linoleic acid, linolenic acid, palmitoleic acid, and elaidic acid. The dimerisation products of the unsaturated fatty acid mixtures obtained in the hydrolysis of natural fats and oils, e.g. sunflower oil, soybean oil, olive oil, rapeseed oil, cottonseed oil and tall oil, may also be used. Hydrogenated, for example by using a nickel catalyst, dimer fatty acids may also be employed.

In addition to the dimer fatty acids, dimerisation usually results in varying amounts of oligomeric fatty acids (so-called "trimer") and residues of monomeric fatty acids (so-called "monomer"), or esters thereof, being present. The amount of monomer can, for example, be reduced by distillation. Suitable dimer fatty acids have a dicarboxylic (or dimer) content of greater than 60%, preferably greater than 75%, more preferably in the range from 80 to 96%, particularly 85 to 92%, and especially 87 to 89% by weight. The trimer content is suitably less than 40%, preferably in the range from 2 to 25%, more preferably 5 to 15%, particularly 7 to 13%, and especially 9 to 11% by weight. The monomer content is preferably less than 10%, more preferably in the range from 0.2 to 5%, particularly 0.5 to 3%, and especially 1 to 2% by weight. All of the above % by weight values are based on the total weight of trimer, dimer and monomer present.

In a preferred embodiment the content of dimer acid in polyesterol (b3), based on the total amount of diacid in polyol (b3) is at least 20 wt.-%, more preferably in the range of 30 to 90 wt.-% and in particular 40 to 80 wt.-%. Polyesterol (b3) based on dimer acid is commercially available for example under the trade name Priplast® from Corda International PIc.

The molecular weight of the polyesterol (b3) preferably is in the range of 450 to 6000 g/mol, more preferably 1000 to 3000 g / mol and most preferably 1500 to 2500 g/mol. More preferable the polyesterol (b3) has a hydroxyl value in the range from 10 to 100, more preferably 30 to 80, particularly 40 to 70, and especially 50 to 60 mg KOH/g. In addition, the polyesterol (b3) preferably has an acid value of less than 2, more preferably less than 1.7, particularly less than 1.3, and especially less than 1.0.

Apart from polyesterols, further polyols having a number average molecular weight of greater than 500 g/mol, for example polyetherols, can also be used as polyols (b), however, in a preferred embodiment as polyols (b) only polyesterols are used. In a more preferred embodiment essentially only polyesterols (b1) and (b2) and optionally (b3) are used as component (b). If graft polyester polyols are part of the polyols (b) only the carrier polyol is considered to judge whether the graft polyols are considered as one of the polyols (b1), (b2) or (b3).

The content of polyesterol (b1) is 15 to 60 % by weight, more preferred 20 to 50 % by weight, the content of polyesterol (b2) is 20 to 80 % by weight, more preferred 35 to 70 % by weight and the content of polyesterol (b3) is 5 to 20 % by weight, more preferred 10 to 15 % by weight, each based on the total weight of the polyesterols (b1), (b2) and (b3).

Furthermore, blowing agents c) are present in the production of polyurethane foam moldings. These blowing agents c) can comprise water. Apart from water, generally known chemically and/or physically acting compounds can additionally be used as blowing agents c). For the purposes of the present invention, chemical blowing agents are compounds which react with isocyanate to form gaseous products, for example water or formic acid. Physical blowing agents are compounds which are dissolved or emulsified in the starting materials for polyurethane production and vaporize under the conditions of polyurethane formation. These are, for example, hydrocarbons, halogenated hydrocarbons and other compounds, for example perfluorinated alkanes, e.g. perfluorohexane, chlorofluorocarbons and ethers, esters, ketones, acetals or mixtures thereof, for example (cyclo)aliphatic hydrocarbons having from 4 to 8 carbon atoms, or fluorinated hydrocarbons such as Solkane® 365 mfc from Solvay Fluorides LLC. In a preferred embodiment, a mixture comprising at least one of these blowing agents and water is used as blowing agent and in particular water is used as sole blowing agent. If no water is used as blowing agent, preference is given to using exclusively physical blowing agents.

The water content is, in a preferred embodiment, from 0.1 to 2% by weight, preferably from 0.2 to 1.5% by weight, particularly preferably from 0.3 to 1.2% by weight, based on the total weight of the components a) to h).
In a further preferred embodiment, hollow microspheres comprising physical blowing agent are added as additional blowing agent to the reaction of the components a) to h).

The hollow microspheres can also be used in admixture with the abovementioned blowing agents.

The hollow microspheres usually comprise a shell of thermoplastic polymer and are filled in the core with a liquid, low-boiling substance based on alkanes. The production of such hollow microspheres is described, for example, in US 3 615 972. The hollow microspheres generally have a diameter of from 5 to 50 µm. Examples of suitable hollow microspheres can be obtained under the trade name Expancell® from Akzo Nobel.

The hollow microspheres are generally added in an amount of from 0.5 to 5% by weight, based on the total weight of the components b), c) and d).

As chain extenders and/or crosslinkers d), use is made of substances having a molecular weight of preferably less than 450 g/mol, particularly preferably from 60 to 400 g/mol, with chain extenders having 2 hydrogen atoms which are reactive toward isocyanates and crosslinkers having 3 hydrogen atoms which are reactive toward isocyanate. These can preferably be used individually or in the form of mixtures. Preference is given to using diols and/or triols having molecular weights below 400, particularly preferably from 60 to 300 and in particular from 60 to 150. Possibilities are, for example, aliphatic, cycloaliphatic and/or araliphatic diols having from 2 to 14, preferably from 2 to 10, carbon atoms, e.g. ethylene glycol, 1,3-propanediol, 1,10-decanediol, 1,2-, 1,3-, 1,4-dihydroxycyclohexane, diethylene glycol, dipropylene glycol and 1,4-butanediol, 1,6-hexanediol and bis(2-hydroxyethyl)hydroquinone, triols, such as 1,2,4-, 1,3,5-trihydroxycyclohexane, glycerol and trimethylolpropane and low molecular weight hydroxyl-comprising polyalkylene oxides based on ethylene oxide and/or 1,2-propylene oxide and the abovementioned diols and/or triols as starter molecules. Particular preference is given to using monoethylene glycol, 1,4-butanediol, diethylene glycol, glycerol or mixtures thereof as chain extender (d).

If chain extenders, crosslinkers or mixtures thereof are employed, they are advantageously used in amounts of from 1 to 60% by weight, preferably from 1.5 to 50% by weight and in particular from 2 to 40% by weight, based on the weight of the components b) and d).

As catalysts for producing the polyurethane foams, preference is given to using compounds which strongly accelerate the reaction of the polyols (b) and optionally chain extenders and crosslinkers (d) with the organic, optionally modified polyisocyanates (a). These comprise amine catalysts. Mention may be made of, for example, amidines such as 2,3-dimethyl-3,4,5,6-tetrahydropyrimidine, tertiary amines such as triethylamine, tributylamine, dimethylbenzylamine, N-methylmorpholine, N-ethylmorpholine, N-cyclohexylmorpholine, N,N,N',N'-tetramethylethylenediamine, N,N,N',N'-tetramethylbutanediamine, N,N,N',N'-tetramethylhexanediamine, pentame-thyldiethylenetriamine, bis(dimethylaminoethyl) ether, bis(dimethylaminopropyl)urea, dimethylpiperazine, 1,2-dimethylimidazole, 1-azabicyclo[3.3.0]octane and preferably 1,4-diazabicyclo[2.2.2]octane and alkanolamine compounds such as triethanolamine, triisopropanolamine, N-methyldiethanolamine and N-ethyldiethanolamine and dimethylethanolamine. Preference is given to using triethylamine, tributylamine, dimethylbenzylamine, N-methylmorpholine, N-ethylmorpholine, N-cyclohexylmorpholine, N,N,N',N'-tetramethylethylenediamine, N,N,N',N'-tetramethylbutanediamine, N,N,N',N'-tetramethylhexanediamine, pentamethyldiethylenetriamine, bis(dimethylaminoethyl) ether, bis(dimethylaminopropyl)urea, dimethylpiperazine, 1,2-dimethylimidazole, 1-azabicyclo[3.3.0]octane, 1,4-diazabicyclo[2.2.2]octane, 1,8-diazabicyclo[5.4.0]undec-7-ene (DBU) and mixtures thereof as amine catalysts. In particular, 1,4-diazabicyclo[2.2.2]octane is used as amine catalyst.

Apart from amine catalysts, it is also possible to use further, catalytically active compounds such as organic metal compounds, preferably organic tin compounds such as the tin(II) salts of organic carboxylic acids, e.g. tin(II) acetate, tin(II) octoate, tin(II) ethylhexanoate and tin(II) laurate, and the dialkyltin(IV) salts of organic carboxylic acids, e.g. dibutyltin diacetate, dibutyltin dilaurate, dibutyltin maleate and dioctyltin diacetate, and also bismuth carboxylates such as bismuth(III) neodecanoate, bismuth 2-ethylhexanoate and bismuth octanoate, or mixtures thereof as catalysts. Preference is given to using exclusively amine catalysts.

Preference is given to using from 0.001 to 5% by weight, in particular from 0.05 to 2% by weight, of catalyst or catalyst combination, based on the weight of the component b).

As carbodiimide (f), use is made of a compound of the general formula Z-N=C=N-Z, where Z is an organic radical and the nitrogen atom of the carbodiimide group -N=C=N- is either bound to a tertiary carbon atom or to a carbon atom of an aromatic system which in the ring positions of the aromatic system adjacent to the C-N bond bears a radical bound via a secondary or tertiary carbon atom to the aromatic system. Examples of suitable radicals Z are tert-butyl groups, isopropyl groups and aryl groups substituted by bulky groups.

It has been found to be advantageous to use a phenyl group substituted by substituents in the 2 and 6 positions as bulky group, where the substituents are in turn bulky groups such as tert-butyl groups or preferably isopropyl groups.

In a preferred embodiment, a compound having the general formula (1), 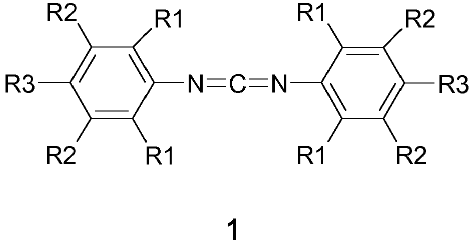 where R1 is an isopropyl or isobutyl group or a mixture thereof and R2 to R3 are each a hydrogen atom or an organic radical, is used as sterically hindered carbodiimide (b). In formula 1, R2 is preferably a hydrogen atom.

In formula 1, R3 is preferably a hydrogen atom or a 1-methyl-1-phenylethyl radical, a phenoxy radical or a tert-butyl radical.

R1 in formula 1 is particularly preferably an isopropyl radical.

In a preferred embodiment, a compound of the general formula (2), 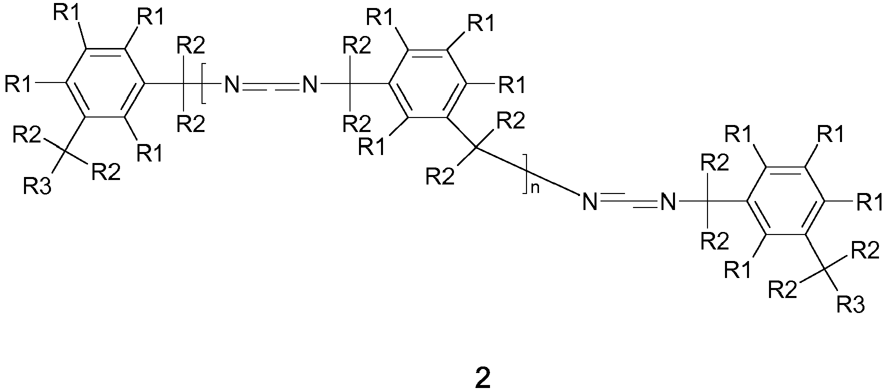
where the radicals R1 are identical or different and are each an organic radical, preferably a hydrogen atom,
the radicals R2 are identical or different and are each an alkyl radical, preferably a methyl group, and
the radicals R3 are identical or different and are each a hydrogen atom, an alkyl radical or are selected from the group consisting of -NCO, -NHCONHR⁴, -NHCONR⁴R⁵ and -NHCOOR⁶ radicals, where R⁴ and R⁵ are identical or different and are each an alkyl, cycloalkyl or aralkyl radical and R⁶ is R⁴ or an alkoxypolyoxalkylene radical and n is an integer from 0 to 10,
is used as sterically hindered carbodiimide (b).

Commercial uretonimine- or carbodiimide-modified polyisocyanates, as can be obtained, for example, under the trade name Lupranat® MM103, are, for the purposes of the present invention, not included among the above-described compounds of the general formula Z-N=C=N-Z.

Such carbodiimides are used, for example, for improving the hydrolysis properties. Such carbodiimides are known and are commercially available under the trade name Elastostab H01 or Stabaxol I.

Esters of mono- or polybasic carboxylic acids are used as component (g). The ester of a monobasic carboxylic acid (i), and/or the ester of a polybasic carboxylic acid (ii) comprises at least one ester of a monobasic carboxylic acid (i), and/or the ester of a polybasic carboxylic acid (ii) acid. The pK values, as determined in aqueous solution at 25 °C, of the (first) dissociation constant of these carboxylic acids generally range from 0.5 to 5, preferably from 0.5 to 4 and more preferably from 1 to 3. Examples of suitable acid components include alkylmonocarboxylic acids such as formic acid, alkylpolycarboxylic acids, such as oxalic acid, malonic acid, maleic acid, fumaric acid and citric acid, arylmonocarboxylic acids such as [alpha]-naphthoic acid and arylpolycarboxylic acids, such as isomers and alkyl-substituted derivatives of phthalic acid, trimellitic acid, and pyromellitic acid, isomers of naphthalene-dicarboxylic acid, and cyclic double esters of [alpha]-hydroxycarboxylic acids such as mandelic acid or lactic acid. Saturated C2-C4 alkylpolycarboxylic acids are preferably used; oxalic acid is particularly preferred. Examples of suitable alcohol components include aliphatic mono- and polyols such as methanol, ethanol, propanol, iso-propanol, ethylene glycol, 1,2- and 1,3-propanediol, isomers of butanol, 2-butene-1,4-diol, 2-butyne-1,4-diol, neopentyl glycol, glycerol, trimethylolpropane and pentaerythritol. Examples of suitable aryl alcohols include phenol and substituted derivatives thereof, naphthol and alkyl-substituted derivatives thereof, hydroquinone, resorcinol, trihydroxybenzenes, and all the polyether and polyether ester polyols cited under (d) chain extenders and/or crosslinkers. Aliphatic monools are preferred, particularly methanol, ethanol, n- or i-propanol, or n-, i- or tert.-butanol. Most preferred are oxalic acid esters as diethyloxalate.

In a prefered embobiment compound (g) comprises (g1) at least one ester of a monobasic carboxylic acid (i), and/or the ester of a polybasic carboxylic acid (ii) acid having a (first) dissociation constant (pK) of 0.5 to 4, preferably 1 to 3, as disclosed above, and (g2) one cyclic ester. Preferably the cyclic ester has 5 to 8, more preferably 5 or 6 atoms in the ring structure and can carry substituents like aliphatic groups or can be unsubstituted. Examples for such cyclic esters are cyclic esterification products of 4-hydroxy butanoic acid (γ-butyrolactone), 5-hydroxy pentanoic acid and 6-hydroxyhexanoic acid. In addition cyclic carbonates as ethylene carbonate, 1,2 propylene carbonate or 1,3 propylene carbonate can be applied as cyclic ester (g2).. Most preferred as cyclic ester (g2) is γ-butyrolacton or 1,2 propylene carbonate. Preferably the weight ratio between compound (g1) and compound (g2) is 1 : 15 to 15 to 1, more preferably 1 : 10 to 10 : 1. Preferably the compound (g) is used in an amount from 0.01 to 10 % by weight, more preferably 0.05 to 5 % by weight, based on the total weight of compounds (a) to (h).

Auxiliaries and/or additives (h) can optionally also be added to the reaction mixture for producing the polyurethane foams. Mention may be made by way of example of mold release agents, fillers, dyes, pigments, hydrolysis inhibitors, odor-absorbing substances and fungistatic and/or bacteriostatic substances.

As suitable mold release agents, mention may be made by way of example of: reaction products of fatty acid esters with polyisocyanates, salts of polysiloxanes comprising amino groups and fatty acids, salts of saturated or unsaturated (cyclo)aliphatic carboxylic acids having at least 8 carbon atoms and tertiary amines and also, in particular, internal mold release agents such as carboxylic esters and/or carboxamides prepared by esterification or amidation of a mixture of montanic acid and at least one aliphatic carboxylic acid having at least 10 carbon atoms by means of at least bifunctional alkanolamines, polyols and/or polyamines having molecular weights of from 60 to 400 g/mol, as disclosed, for example, in EP 153 639, mixtures of organic amines, metal salts of stearic acid and organic monocarboxylic and/or dicarboxylic acids or anhydrides thereof, as disclosed, for example, in DE-A-3 607 447, or mixtures of an imino compound, the metal salt of a carboxylic acid and optionally a carboxylic acid, as disclosed, for example, in US 4 764 537. Reaction mixtures according to the invention preferably do not comprise any further mold release agents.

For the purposes of the present invention, fillers, in particular reinforcing fillers, are the customary organic and inorganic fillers, reinforcing materials, weighting agents, coating agents, etc., known per se. Specific examples are: inorganic fillers such as siliceous minerals, for example sheet silicates such as antigorite, bentonite, serpentine, horn-blendes, amphibols, chrysotile and talc, metal oxides such as kaolin, aluminum oxides, titanium oxides, zinc oxide and iron oxides, metal salts such as chalk and barite, and inorganic pigments such as cadmium sulfide, zinc sulfide and also glass, etc. Preference is given to using kaolin (China clay), aluminum silicate and coprecipitates of barium sulfate and aluminum silicate. Possible organic fillers are, for example: carbon black, melamine, rosin, cyclopentadienyl resins and graft polymers and also cellulose fibers, polyamide fibers, polyacrylonitrile fibers, polyurethane fibers and polyester fibers based on aromatic and/or aliphatic dicarboxylic esters and in particular carbon fibers.

The inorganic and organic fillers can be used individually or as mixtures and are advantageously added to the reaction mixture in amounts of from 0.5 to 50% by weight, preferably from 1 to 40% by weight, based on the weight of the components a) to (h).

As hydrolysis inhibitors, it is possible to use conventional hydrolysis inhibitors such as epoxides and oxazolidines.

In the process of the invention, the starting components (a) to (h) are mixed with one another in such amounts that the equivalence ratio of NCO groups of the polyisocyanates (a) to the sum of the reactive hydrogen atoms of the components (b), (c) and (d) is from 1 : 0.8 to 1 : 1,25, preferably from 1 : 0.9 to 1 : 1.15. Here, a ratio of 1 : 1 corresponds to an isocyanate index of 100. For the purposes of the present invention, the isocyanate index is the stoichiometric ratio of isocyanate groups to groups which are reactive toward isocyanate, multiplied by 100.

To produce the cast polyurethane resins of the invention, the components of the cast polyurethane resin system are mixed, preferably at temperatures of from 30 to 90°C, particularly preferably from 40 to 80°C, more preferably from 45 to 70°C and in particular at from 50 to 60°C. The mixture is then cured, preferably in a mold, to give the cast polyurethane resin. The mold temperatures are usually from 0 to 130°C, preferably from 60 to 120°C and particularly preferably from 80 to 110°C. Mixing of the components is usually carried out in low-pressure machines. The finished cast polyurethane resins can be subjected to further heat treatment at elevated temperatures, for example from 50 to 120°C, preferably from 60 to 110°C and in particular from 80 to 100°C, for a period of usually from 10 to 24 hours after removal from the mold in order to further improve the mechanical properties. Here, the reaction mixture for producing the cast polyurethane resins comprises essentially no blowing agent (c). "Essentially no blowing agent" means that no extra blowing agent is added. However, the polyol may, due to its method of production, comprise small amounts of water, for example. The compounds having groups which are reactive toward isocyanate preferably comprise desiccants, for example zeolites, in order to avoid accumulation of water in the components and thus foaming of the polyurethanes.

The inventive cast polyurethane resins are preferably used as engineering parts in industrial or agricultural applications such as rolls or rollers or as engineering parts in mining, e.g. sieves.

The polyurethane foam moldings of the invention are preferably produced by the one-shot process using the low-pressure or high-pressure technique in closed, advantageously heated molds. The molds usually consist of metal, e.g. aluminum or steel. These processing techniques are described, for example, by Piechota and Röhr in "Integralschaumstoff", Carl-Hanser-Verlag, Munich, Vienna, 1975, or in "Kunststoffhandbuch", volume 7, Polyurethane, 3rd edition, 1993, chapter 7.

The starting components (a) to (h) are for this purpose preferably mixed at a temperature of from 15 to 90°C, particularly preferably from 25 to 55°C, and the reaction mixture is introduced into the mold, optionally under superatmospheric pressure. Mixing can be carried out mechanically by means of a stirrer or a stirring screw or under high pressure in a countercurrent injection process. The mold temperature is advantageously from 20 to 160°C, preferably from 30 to 120°C, particularly preferably from 30 to 60°C. For the purposes of the invention, the mixture of the components a) to h) at reaction conversions of less than 90%, based on the isocyanate groups, is referred to as reaction mixture. In a preferred embodiment the compounds are premixed in form of an isocyanate component comprising isocyanates (a) and a polyol component comprising polyols (b), if present blowing agents (c), chain extenders and/or crosslinkers (d), catalysts (e) and carbodiimide (f). Compound (g) and compound (h) can either be added to the isocyanate component or to the polyol component. In a preferred embodiment the isocyanate component comprises compound (g) while the polyol component comprises compound (h). To produce the polyester polyurethane according to the invention the polyol compound and the isocyanate compound are mixed and processed as outlined above.

The amount of reaction mixture introduced into the mold is selected so that the moldings obtained, in particular integral foam, have a density of preferably from 150 g/l to 850 g/l, more preferably from 180 g/l to 750 g/l, particularly preferably from 200 g/l to 700 g/l and in particular from 200 to 650 g/l. The degrees of compaction for producing the integral polyurethane foams of the invention are in the range from 1.1 to 8.5, preferably from 1.6 to 7.0.

The polyurethane foam moldings of the invention are preferably used as shoe soles and particularly preferably as midsoles, for example for street shoes, sport shoes, sandals and boots. Furthermore, polyurethane foams according to the invention can be used in the interior of vehicles, for example in cars as steering wheels, headrests or gearstick knobs or as chair armrests. Further possible uses are as armrests for chairs or as motorcycle saddles. Cast polyurethane resins can be used, for example, as shoe outsoles or as seals. In particular, the polyurethane molding of the invention is used as shoe soles, in particular for safety shoes or army boots. These shoe soles can be compact soles or foamed soles, in particular integral polyurethane foams. Surprisingly polyurethane mouldings according to the present invention, especially polyurethane foams according to the present invention pass the hydrolysis testing using SATRA TM344 (storing at 70 °C and 95 % relative humidity) for at least 28 days with tensile strength retention of more than 80 % of the initial value measured according to DIN 53504 and maintain a low abrasion. This corresponds to a shelf life under normal climate of low moisture and 20 °C of at least about 8 years and under tropical climate with high moisture and 30 °C of about 4 years.

The invention is illustrated below with the aid of examples:
Starting materials used:
- Polyol 1:: Polyester polyol based on adipic acid, monoethylene glycol (MEG) and 1,4-butanediol (BD) (weight ratio MEG : BD = 2:1) having an OH number of 56 mg KOH/g
- Polyol 2:: Polyesterol based on adipic acid, monoethylene glycol, diethylene glycol and trimethylolpropane and having an OH number of 60 mg KOH/g and a functionality of 2.65
- Polyol 3:: Polyester polyol based on adipic acid, 1,4-butanediol and 1,5 pentane diol (PD) (weight ratio BD : PD = 1:1.2) having an OH number of 70 mg KOH/g
- Polyol 4:: Polyester polyol based on adipic acid, 1,4-butanediol and neopentylglycol (NPG) (weight ratio BD : NPG = 1:1.7 having an OH number of 56 mg KOH/g
- Polyol 5:: Dimer acid based polyesterol, based on Adipic Acid and Dimer Acid, OH number of 56 mg KOH/g sold under the trade name Priplast® 3192 from Corda International PIc.
- Polyol 6:: Dimer acid based polyesterol based on dimer acid, adipic acid, monoethylene glycol and butanediol (weight ratio BD : MEG : dimer acid = 1 : 1,4 : 4,9) OH number of 56 mg KOH/g,
- Cat 1:: Triethylenediamine 33% strength dissolved in monoethylene glycol
- Cat 2:: Triethylenediamine blocked by acid
- Crosslinker:: OH-number 270 mg KOH/g, functionality = 3
- KV:: Monoethylene glycol
- Stabi 1:: Cell stabilizer Dabco DC 193 from Air Products
- HS:: Elastostab H01® from BASF Polyurethanes GmbH
- ISO:: Prepolymer based on 4,4'-MDI, carbodiimidmodified MDI, polyol 1 and polyol 2, having an NCO-content of 18% by weight containing 7% by weight γ-butyrolactone and 1% by weight diethyloxalate

The formulations for comparative examples and the examples according to the invention were produced according to the tables below. Processing for the foamed polyurethane moldings was carried out on a low-pressure machine EMB F20, with the temperature of the polyol mixture and of the isocyanate being about 45°C.

The optimum mixing ratio of polyol and isocyanate component (ISO was used as isocyanate for all examples and comparative examples) was determined by means of a penetration test, which is prior art in the shoe industry. After the optimum mixing ratio had been determined, a corresponding mixture was introduced into a mold in order to produce test plates.

The materials were conditioned under standard conditions of temperature and humidity for at least 2 days before the mechanical characterization was carried out. Here, the tensile strength was measured in accordance with DIN 53504. To determine the hydrolysis properties, the test specimens produced in accordance with DIN 53504 (SATRA TM344) were stored at 70°C and 95% relative atmospheric humidity and the tensile strength of the specimens was measured after 21, 28 and 35 days of hydrolysis aging (ZF 21d HL; ZF 28 d HL and ZF35 d HL). Abrasion was measured according to DIN53516.

### Midsole recipe

| | C1 | C2 | Example1 | C3 | Example2 |
|---|---|---|---|---|---|
| Polyol 1 | 84.83 | 63.62 | 56.12 | 42.42 | 37.42 |
| Polyol 3 | - | 21.21 | 18.71 | 42.42 | 37.42 |
| Polyol 5 | - | - | 10 | - | 10 |
| KV | 8.88 | 8.88 | 8.88 | 8.88 | 8.88 |
| Cat 1 | 1 | 1 | 1 | 1 | 1 |
| Crosslinker | 2.49 | 2.49 | 2.49 | 2.49 | 2.49 |
| HS | 2 | 2 | 2 | 2 | 2 |
| Surfactant | 0.4 | 0.4 | 0.4 | 0.4 | 0.4 |
| water | 0.4 | 0.4 | 0.4 | 0.4 | 0.4 |
| | | | | | |
| Mechanical property | | | | | |
| Density (g/cm³) | 0.50 | 0.50 | 0.50 | 0.50 | 0.50 |
| Hardness (Shore A) | 52 | 51 | 51 | 50 | 49 |
| Tensile strength (N/mm²) | 5.6 | 5.4 | 5.7 | 5.8 | 6.1 |
| Tensile strength retention after 21 days hydrolysis (% of initial value) | - | 109 | 118 | 107 | 111 |
| Tensile strength retention after 28days hydrolysis (% of initial value) | 14 | 63 | 126 | 84 | 110 |

### Outsole recipe

| | C4 | C5 | C6 | Example3 |
|---|---|---|---|---|
| Polyol 1 | 90 | 60 | 45 | 40 |
| Polyol 4 | - | - | 45 | 40 |
| Polyol 6 | - | 30 | - | 10 |
| KV | 4.5 | 4.5 | 4.5 | 4.5 |
| Cat 1 | 1.5 | 1.5 | 1.5 | 1.5 |
| Crosslinker | 1 | 1 | 1 | 1 |
| HS | 2 | 2 | 2 | 2 |
| Plasticizer | 3 | 3 | 3 | 3 |
| Water | 0.05 | 0.05 | 0.05 | 0.05 |
| | | | | |
| Mechanical property | | | | |
| Density (g/cm³) | 1.0 | 1.0 | 1.0 | 1.0 |
| Hardness (shore A) | 64 | 63 | 63 | 64 |
| Abrasion (mm³) | 52 | 54 | 47 | 87 |
| Abrasion after 21 days hydrolysis (mm³) | 57 | 94 | 61 | 90 |
| Abrasion after 28 days hydrolysis (mm³) | 113 | 188 | 81 | 100 |
| Abrasion after 35 days hydrolysis (mm³) | 283 | 313 | 187 | 137 |
| Tensile strength (N/mm²) | 14.2 | 13.2 | 13.7 | 12.9 |
| Tensile strength retention after 21 days hydrolysis (% of initial value) | 91 | 88 | 110 | 109 |
| Tensile strength retention after 28days hydrolysis (% of initial value) | 71 | 58 | 82 | 115 |
| Tensile strength retention after 35days hydrolysis (% of initial value) | 37 | 20 | 56 | 94 |

### Single density recipe

| | C7 | Example4 |
|---|---|---|
| Polyol 1 | 91.05 | 56.15 |
| Polyol 4 | - | 25 |
| Polyol 6 | - | 10 |
| MKV | 5 | 5 |
| Cat. 1 | 0.9 | 0.9 |
| Cat. 2 | 0.3 | 0.3 |
| HS | 2 | 2 |
| Niax L5305 | 0.3 | 0.3 |
| Water | 0.35 | 0.35 |
| | | |
| Mechanical property | | |
| Density (g/cm³) | 0.6 | 0.63 |
| Hardness (shore A) | 44 | 46 |
| Abrasion (mm³) | 242 | 50 |
| Abrasion after 21 days hydrolysis (mm³) | 450 | 120 |
| Abrasion after 28 days hydrolysis (mm³) | 569 | 194 |
| Abrasion after 35 days hydrolysis (mm³) | destroyed | 313 |
| Tensile strength (N/mm²) | 6.8 | 6.3 |
| Tensile strength retention after 21 days hydrolysis (% of initial value) | 79 | 110 |
| Tensile strength retention after 28days hydrolysis (% of initial value) | 40 | 102 |
| Tensile strength retention after 35days hydrolysis (% of initial value) | destroyed | 86 |

It can be seen that polyester polyurethane moldings according to the invention show superior hydrolysis aging. Especially when dimer acid is additionally applied the hydrolysis resistance is further increased. In contrast, is dimer acid is used without a polyol (b1) hydrolysis resistance cannot be increased.

## Claims

1. A process for producing polyurethane moldings, wherein
a) organic polyisocyanates are mixed with
b) polyol comprising polyesterols,
c) optionally blowing agents,
d) chain extenders and/or crosslinkers,
e) amine catalyst
f) carbodiimide of the general formula Z-N=C=N-Z, where Z is an organic radical and the nitrogen atom of the carbodiimide group -N=C=N- is bound either to a tertiary carbon atom or to a carbon atom of an aromatic system which on the ring positions adjacent to the C-N bond in the aromatic system bears an organic radical bound via a secondary or tertiary carbon atom to the aromatic system,
g) at least one member selected from the group consisting of (i) an ester of a monobasic carboxylic acid, and (ii) an ester of a polybasic carboxylic acid, the (first) dissociation constant (pK) of each acid being 0.5 to 5, and optionally
h) other auxiliaries and/or additives,
to form a reaction mixture, the mixture is introduced into a mold and allowed to react to form a polyurethane molding,
wherein the total weight of polyesterols (b1), (b2) and (b3) comprise
15 to 60 % by weight of a polyesterol (b1) obtainable by esterification of an aliphatic dicarboxylic acid having 2 to 10, carbon atoms and at least one higher functional alcohol having 5 to 20 carbon atoms and optionally one higher functional alcohol having 2 to 4 carbon atoms wherein at least 20 wt.-% of higher functional alcohol is a higher functional alcohol having 5 or more carbon atoms, based on the total amount of the higher functional alcohol in component (b1) and
20 to 80 % by weight of a polyesterol (b2) obtainable by esterification of an aliphatic or aromatic dicarboxylic acid having 2 to 10 carbon atoms and at least one higher functional alcohol having 2 to 4 carbon atoms and less than 20 wt.-% of at least one higher functional alcohol having 5 or more carbon atoms, based on the total amount of the higher functional alcohol in component (b2), and
5 to 20 % by weight of a further polyesterol (b3) wherein the acid component comprises at least one dimer acid.

2. The process according to claim 1, wherein a compound of the general formula (1), 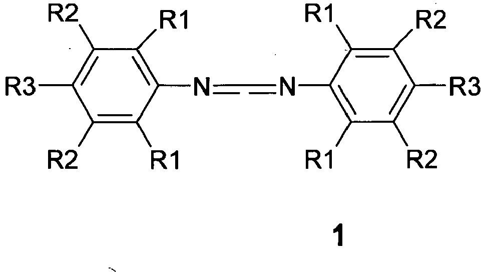
where R1 is an isopropyl or isobutyl group and R2 and R3 are each a hydrogen atom or an organic radical,
is used as carbodiimide (f).

3. The process according to claim 1, wherein a compound of the general formula (2), 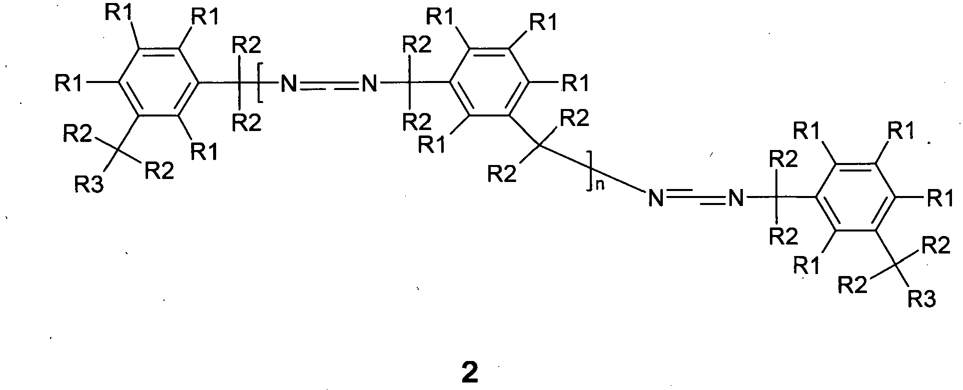
where the radicals R1 are identical or different and are each an organic radical, preferably a hydrogen atom,
the radicals R2 are identical or different and are each an alkyl radical, preferably a methyl group, and
the radicals R3 are identical or different and are each a hydrogen atom, an alkyl radical or are selected from the group consisting
of -NCO, -NHCONHR⁴, -NHCONR⁴R⁵ and -NHCOOR⁶ radicals, where R⁴ and R⁵ are identical or different and are each an alkyl, cycloalkyl or aralkyl radical and R⁶ is R⁴ or an alkoxypolyoxalkylene radical and
n is an integer from 0 to 10,
is used as carbodiimide (f).

4. The process according to any of claims 1 to 3, wherein the carbodiimide has groups which are reactive toward isocyanates.

5. The process according to any of claims 1 to 4, wherein the carbodiimide has polyether groups obtainable by polymerization of alkylene oxide.

6. The process according to any of claims 1 to 5, wherein the content of the carbodiimide (f) is 0.1 to 5 parts by weight, based on the total weight of compounds (b) to (g).

7. The process according to any of claims 1 to 6, wherein the ester of a monobasic carboxylic acid (i), and/or the ester of a polybasic carboxylic acid (ii) comprises (g1) at least one ester of a monobasic carboxylic acid (i), and/or the ester of a polybasic carboxylic acid (ii) acid having a (first) dissociation constant (pK) of 0.5 to 4 and (g2) one cyclic ester.

8. The process according to claim 7, wherein the ratio between compound (g1) and compound (g2) is 1 : 15 to 15 to 1.

9. The process according to any of claims 1 to 8, wherein the total content of compound (g), based on the total weight of compounds (a) to (h) is 0.01 to 10 % by weight

10. The process according to any of claims 1 to 9, wherein the polyesterol comprises a polyesterol (b3) and wherein the polyesterol (b3) is obtainable by reacting a dimer acid, optionally an aromatic or aliphatic diacid having 2 to 15 carbon atoms and at least one higher functional alcohol having 2 to 20 carbon atoms..

11. The process according to claim 10 wherein the dimer acid is obtainable by dimerization of unsaturated fatty acids.

12. The process according to any of claims 10 or 11, wherein the content of the dimer acid, based on the total amount of the dimer acid and the aromatic or aliphatic acid in the polyesterol having 2 to 20 carbon atoms (b3) is at least 10 mol-%.

13. Polyurethane moulding obtainable by a process according to any of the claims 1 to 12.

14. The use of a polyurethane molding according to claim 13 as shoe sole.

## Patentansprüche

1. Verfahren zur Herstellung von Polyurethanformkörpern, bei dem man
a) organische Polyisocyanate mit
b) Polyol, umfassend Polyesterole,
c) gegebenenfalls Treibmitteln,
d) Kettenverlängerungsmitteln und/oder Vernetzungsmitteln,
e) Aminkatalysator,
f) Carbodiimid der allgemeinen Formel Z-N=C=N-Z, wobei Z einen organischen Rest darstellt und das Stickstoffatom der Carbodiimidgruppe -N=C=N- entweder an ein tertiäres Kohlenstoffatom oder an ein Kohlenstoffatom eines aromatischen Systems, das an den der C-N-Bindung benachbarten Ringpositionen im aromatischen System einen über ein sekundäres oder tertiäres Kohlenstoffatom an das aromatische System gebundenen organischen Rest trägt, gebunden ist,
g) mindestens einem Mitglied aus der Gruppe bestehend aus (i) einem Ester einer einbasigen Carbonsäure und (ii) einem Ester einer mehrbasigen Carbonsäure, wobei die (erste) Dissoziationskonstante (pK) jeder Säure 0,5 bis 5 beträgt, und gegebenenfalls
h) sonstigen Hilfsmitteln und/oder Zusatzstoffen zu einer Reaktionsmischung vermischt, die Mischung in eine Form gibt und zu einem Polyurethanformkörper aushärten lässt,
wobei das Gesamtgewicht der Polyesterole (b1), (b2) und (b3)
15 bis 60 Gew.-% eines Polyesterols (b1), das durch Veresterung einer aliphatischen Dicarbonsäure mit 2 bis 10 Kohlenstoffatomen und mindestens einem höherfunktionellen Alkohol mit 5 bis 20 Kohlenstoffatomen und gegebenenfalls einem höherfunktionellen Alkohol mit 2 bis 4 Kohlenstoffatomen erhältlich ist, wobei es sich bei mindestens 20 Gew.-% des höherfunktionellen Alkohols um einen höherfunktionellen Alkohol mit 5 oder mehr Kohlenstoffatomen handelt, bezogen auf das Gesamtgewicht des höherfunktionellen Alkohols in Komponente (b1), und
20 bis 80 Gew.-% eines Polyesterols (b2), das durch Veresterung einer aliphatischen oder aromatischen Dicarbonsäure mit 2 bis 10 Kohlenstoffatomen und mindestens einem höherfunktionellen Alkohol mit 2 bis 4 Kohlenstoffatomen und weniger als 20 Gew.-% mindestens eines höherfunktionellen Alkohols mit 5 oder mehr Kohlenstoffatomen, bezogen auf das Gesamtgewicht des höherfunktionellen Alkohols in Komponente (b2), erhältlich ist, und
5 bis 20 Gew.-% eines weiteren Polyesterols (b3), wobei die Säurekomponente mindestens eine Dimersäure umfasst,
umfasst.

2. Verfahren nach Anspruch 1, bei dem als Carbodiimid (f) eine Verbindung der allgemeinen Formel (1) verwendet wird, 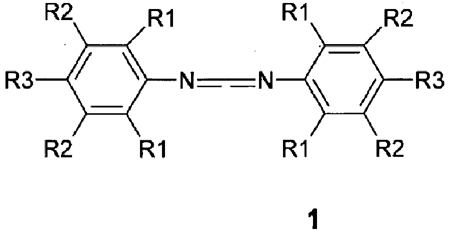 in der R1 eine Isopropyl- oder Isobutylgruppe darstellt und R2 und R3 jeweils ein Wasserstoffatom oder einen organischen Rest darstellen.

3. Verfahren nach Anspruch 1, bei dem als Carbodiimid (f) eine Verbindung der allgemeinen Formel (2) verwendet wird, 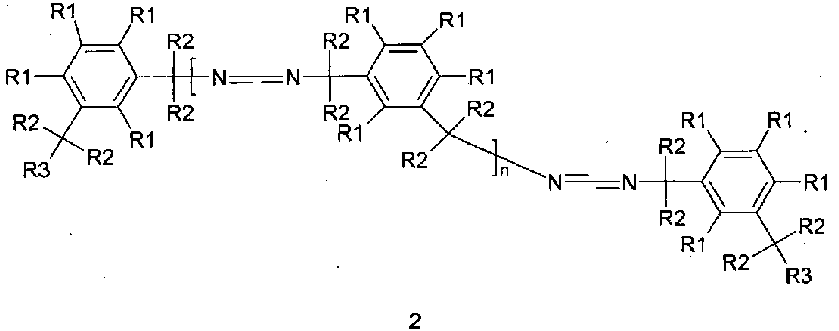
in der die Reste R1 gleich oder verschieden sind und jeweils einen organischen Rest, bevorzugt ein Wasserstoffatom, bedeuten,
die Reste R2 gleich oder verschieden sind und jeweils für einen Alkylrest, bevorzugt eine Methylgruppe, stehen, und
die Reste R3 gleich oder verschieden sind und jeweils für ein Wasserstoffatom oder einen Alkylrest stehen oder aus der Gruppe bestehend aus -NCO-, -NHCONHR⁴-, -NHCONR⁴R⁵- und -NHCOOR⁶-Resten ausgewählt ist, wobei R⁴ und R⁵ gleich oder verschieden sind und jeweils für einen Alkyl-, Cycloalkyl- oder Aralkylrest stehen und R⁶ für R⁴ oder einen Alkoxypolyoxyalkylenrest steht, und
n eine ganze Zahl von 0 bis 10 ist.

4. Verfahren nach einem der Ansprüche 1 bis 3, bei dem das Carbodiimid gegenüber Isocyanaten reaktive Gruppen aufweist.

5. Verfahren nach einem der Ansprüche 1 bis 4, bei dem das Carbodiimid durch Polymerisation von Alkylenoxid erhältliche Polyethergruppen aufweist.

6. Verfahren nach einem der Ansprüche 1 bis 5, bei dem der Gehalt des Carbodiimid (f) 0,1 bis 5 Gewichtsteile, bezogen auf das Gesamtgewicht der Verbindungen (b) bis (g), beträgt.

7. Verfahren nach einem der Ansprüche 1 bis 6, bei dem der Ester einer einbasigen Carbonsäure (i) und/oder der Ester einer mehrbasigen Carbonsäure (ii) (g1) mindestens einen Ester einer einbasigen Carbonsäure (i) und/oder den Ester einer mehrbasigen Carbonsäure (ii) Säure mit einer (ersten) Dissoziationskonstante (pK) von 0,5 bis 4 und (g2) einen cyclischen Ester umfasst.

8. Verfahren nach Anspruch 7, bei dem das Verhältnis zwischen Verbindung (g1) und Verbindung (g2) 1 : 15 bis 15 zu 1 beträgt.

9. Verfahren nach einem der Ansprüche 1 bis 8, bei dem der Gesamtgehalt von Verbindung (g), bezogen auf das Gesamtgewicht der Verbindungen (a) bis (h), 0,01 bis 10 Gew.-% beträgt.

10. Verfahren nach einem der Ansprüche 1 bis 9, bei dem das Polyesterol ein Polyesterol (b3) umfasst und wobei das Polyesterol (b3) durch Umsetzung einer Dimersäure, gegebenenfalls einer aromatischen oder aliphatischen Disäure mit 2 bis 15 Kohlenstoffatomen und mindestens einem höherfunktionellen Alkohol mit 2 bis 20 Kohlenstoffatomen erhältlich ist.

11. Verfahren nach Anspruch 10, bei dem die Dimersäure durch Dimerisierung von ungesättigten Fettsäuren erhältlich ist.

12. Verfahren nach Anspruch 10 oder 11, bei dem der Gehalt der Dimersäure, bezogen auf die Gesamtmenge der Dimersäure und der aromatischen oder aliphatischen Säure in dem Polyesterol mit 2 bis 20 Kohlenstoffatomen (b3), mindestens 10 Mol-% beträgt.

13. Polyurethanformkörper, erhältlich durch ein Verfahren nach einem der Ansprüche 1 bis 12.

14. Verwendung eines Polyurethanformkörpers nach Anspruch 13 als Schuhsohle.

## Revendications

1. Procédé de production de moulages en polyuréthane, dans lequel
a) on mélange des polyisocyanates organiques avec
b) des polyestérols comprenant du polyol,
c) éventuellement des agents gonflants,
d) des agents d'allongement de chaîne et/ou des agents de réticulation,
e) un catalyseur aminé,
f) un carbodiimide de la formule générale Z-N=C=N-Z, où Z est un radical organique et l'atome d'azote du groupe carbodiimide -N=C=N- est lié à un atome de carbone tertiaire ou à un atome de carbone d'un système aromatique qui, sur les positions du cycle adjacentes à la liaison C-N dans le système aromatique, porte un radical organique lié par le biais d'un atome de carbone secondaire ou tertiaire au système aromatique,
g) au moins un élément choisi dans le groupe constitué par (i) un ester d'un acide carboxylique monobasique, et (ii) un ester d'un acide carboxylique polybasique, la (première) constante de dissociation (pK) de chaque acide étant de 0,5 à 5, et éventuellement
h) d'autres auxiliaires et/ou additifs,
pour former un mélange réactionnel, on introduit le mélange dans un moule et on le laisse réagir pour former un moulage en polyuréthane,
dans lequel le poids total de polyestérols (b1), (b2) et (b3) comprend
15 à 60 % en poids d'un polyestérol (b1) pouvant être obtenu par estérification d'un acide dicarboxylique aliphatique ayant 2 à 10 atomes de carbone et d'au moins un alcool fonctionnel supérieur ayant 5 à 20 atomes de carbone et éventuellement d'un alcool fonctionnel supérieur ayant 2 à 4 atomes de carbone, au moins 20 % en poids d'alcool fonctionnel supérieur étant un alcool fonctionnel supérieur ayant au moins 5 atomes de carbone, rapporté à la quantité totale de l'alcool fonctionnel supérieur dans le constituant (b1), et
20 à 80 % en poids d'un polyestérol (b2) pouvant être obtenu par estérification d'un acide dicarboxylique aliphatique ou aromatique ayant 2 à 10 atomes de carbone et d'au moins un alcool fonctionnel supérieur ayant 2 à 4 atomes de carbone et de moins de 20 % en poids d'au moins un alcool fonctionnel supérieur ayant au moins 5 atomes de carbone, rapporté à la quantité totale de l'alcool fonctionnel supérieur dans le constituant (b2), et
5 à 20 % en poids d'un autre polyestérol (b3) dans lequel le constituant acide comprend au moins un acide dimère.

2. Procédé selon la revendication 1, dans lequel un composé de la formule générale (1), 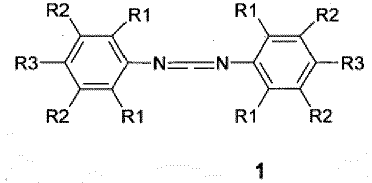
où R1 est un groupe isopropyle ou isobutyle et R2 et R3 sont chacun un atome d'hydrogène ou un radical organique,
est utilisé comme carbodiimide (f).

3. Procédé selon la revendication 1, dans lequel un composé de la formule générale (2), 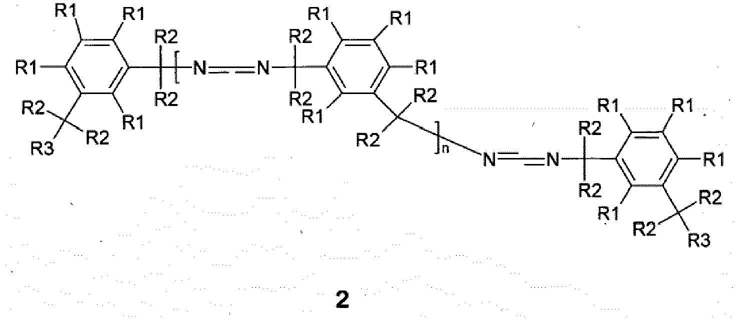
où les radicaux R1 sont identiques ou différents et sont chacun un radical organique, de préférence un atome d'hydrogène,
les radicaux R2 sont identiques ou différents et sont chacun un radical alkyle, de préférence un groupe méthyle, et
les radicaux R3 sont identiques ou différents et sont chacun un atome d'hydrogène, un radical alkyle ou sont choisis dans le groupe constitué par les radicaux -NCO, -NHCONHR⁴, -NHCONR⁴R⁵ et -NHCOOR⁶, où R⁴ et R⁵ sont identiques ou différents et sont chacun un radical alkyle, cycloalkyle ou aralkyle et R⁶ est R⁴ ou un radical alcoxypolyoxyalkylène et
n est un entier de 0 à 10,
est utilisé comme carbodiimide (f).

4. Procédé selon l'une quelconque des revendications 1 à 3, dans lequel le carbodiimide a des groupes qui sont réactifs vis-à-vis des isocyanates.

5. Procédé selon l'une quelconque des revendications 1 à 4, dans lequel le carbodiimide a des groupes polyéther pouvant être obtenus par polymérisation d'un oxyde d'alkylène.

6. Procédé selon l'une quelconque des revendications 1 à 5, dans lequel la teneur du carbodiimide (f) est de 0,1 à 5 parties en poids, rapporté au poids total des composés (b) à (g).

7. Procédé selon l'une quelconque des revendications 1 à 6, dans lequel l'ester d'un acide carboxylique monobasique (i), et/ou l'ester d'un acide carboxylique polybasique (ii) comprend (g1) au moins un ester d'un acide carboxylique monobasique (i), et/ou l'ester d'un acide carboxylique polybasique (ii) acide ayant une (première) constante de dissociation (pK) de 0,5 à 4, et (g2) un ester cyclique.

8. Procédé selon la revendication 7, dans lequel le rapport entre le composé (g1) et le composé (g2) est de 1:15 à 15 pour 1.

9. Procédé selon l'une quelconque des revendications 1 à 8, dans lequel la teneur totale du composé (g), rapportée au poids total des composés (a) à (h), est de 0,01 à 10 % en poids.

10. Procédé selon l'une quelconque des revendications 1 à 9, dans lequel le polyestérol comprend un polyestérol (b3) et dans lequel le polyestérol (b3) peut être obtenu en faisant réagir un acide dimère, éventuellement un diacide aromatique ou aliphatique ayant 2 à 15 atomes de carbone et au moins un alcool fonctionnel supérieur ayant 2 à 20 atomes de carbone.

11. Procédé selon la revendication 10 dans lequel l'acide dimère peut être obtenu par dimérisation d'acides gras insaturés.

12. Procédé selon l'une quelconque des revendications 10 ou 11, dans lequel la teneur de l'acide dimère, rapportée à la quantité totale de l'acide dimère et de l'acide aromatique ou aliphatique dans le polyestérol ayant 2 à 20 atomes de carbone (b3), est d'au moins 10 % en moles.

13. Moulage en polyuréthane pouvant être obtenu par un procédé selon l'une quelconque des revendications 1 à 12.

14. Utilisation d'un moulage en polyuréthane selon la revendication 13 comme semelle de chaussure.
